# EUROPÄISCHE PATENTANMELDUNG

(11) **EP 2 037 166 A2**
(43) Veröffentlichungstag der Anmeldung: **18.03.2009**
(21) Anmeldenummer: 08015810.8
(22) Anmeldetag: 09.09.2008
(51) Int. Cl.: F16P 3/02, B23Q 11/08

(54) **Maschinenabdeckung mit einer längenveränderlichen Schutzabdeckung**

(30) Priorität: 13.09.2007 DE 102007043808
(71) Anmelder: HEMA Maschinen- und Apparateschutz GmbH, 63500 Seligenstadt (DE)
(72) Erfinder: Willand, Thorsten, 64832 Babenhausen (DE)
(74) Vertreter: Schumacher, Bernd

(57) **Zusammenfassung**

Die Erfindung betrifft eine Maschinenabdeckung mit einer längenveränderlichen Schutzabdeckung (10), deren Enden im betrieblichen Arbeitsbereich (16) der Schutzabdekkung mit einem stationären Anschlußglied (12) und einem beweglichen Anschlußglied (14) verbunden sind, wobei das bewegliche Anschlußglied (14) maschinenseitig zwischen einer betrieblichen Minimalposition (18) mit minimaler und einer betrieblichen Maximalposition (20) mit maximaler Längenausdehnung der Schutzabdeckung linear hin- und herbeweglich angetrieben ist.

## Beschreibung

Maschinenabdeckung mit einer längenveränderlichen Schutzabdeckung, deren Enden im betrieblichen Arbeitsbereich der Schutzabdeckung mit einem stationären Anschlußglied und einem beweglichen Anschlußglied verbunden sind, wobei das bewegliche Anschlußglied maschinenseitig zwischen einer betrieblichen Minimalposition mit minimaler und einer betrieblichen Maximalposition mit maximaler Längenausdehnung der Schutzabdeckung linear hin- und herbeweglich angetrieben ist

Solche Maschinenabdeckungen sind vielfach als im Bedarfsfall von oben zugängliche Dachabdeckungen ausgeführt. Im normalen Betriebszustand schließen diese den Arbeitsraum nach oben ab. Beispielsweise für von oben erfolgende Kranbeladungen von großen und schweren Werkstücken ist es erforderlich, die Schutz- oder Dachabdeckungen lösbar und verschiebbar auszubilden. In diesem Zusammenhang ist es beispielsweise bekannt, zum Öffnen entsprechende Schraubverbindungen oder Bolzensicherungen von Hand zu lösen und dann die Schutzabdeckung von Hand öffnend zu verschieben, um anschließend zum Schließen diese Vorgänge wieder rückgängig zu machen. Diese Vorgänge erfolgen teils auch durch ein gesteuertes Öffnen und Schließen durch Elektrik, Pneumatik oder Hydraulik. Es gibt auch separat gesteuerte und angetriebene Konsolen (Endrahmen) mit eigenem Antrieb. Alle diese Lösungen sind kompliziert und teuer. Sie erfordern entweder aufwendige elektrische, pneumatische oder hydraulische Zusatzteile, spezielle herstellerspezifische Schnittstellen oder ein manuelles Eingreifen.

Der vorliegenden Erfindung liegt die Aufgabe zugrunde, eine Maschinenabdeckung der genannten Art so auszubilden, daß sie in maschinentechnisch einfacher Art ohne manuelles Eingreifen mit kostengünstigen Mitteln auf rein mechanischem Wege leicht sowie schnell zu öffnen und wieder zu schließen ist.

Zur Lösung der gestellten Aufgabe wird bei einer Maschinenabdeckung der im Oberbegriff genannten Art erfindungsgemäß vorgeschlagen, daß das im Arbeitsbereich stationäre Ende der Schutzabdeckung fest mit einem doppelseitig reversibel arbeitenden Koppelglied verbunden ist, welches im Arbeitsbereich der Schutzabdeckung eine lösbare mechanische Verbindung mit dem stationären Anschlußglied aufweist, daß im Falle einer maschinenseitig veranlaßten Öffnungsbewegung des beweglichen Anschlußgliedes in einen an dessen betriebliche Minimalposition angrenzenden Überhubbereich durch bewegungsabhängig erfolgende gegenseitige mechanische Druckeingriffe zwischen dem beweglichen Anschlußglied sowie dem Koppelglied und zwischen diesem sowie dem stationären Anschlußglied eine lösbare mechanische Verbindung des Koppelgliedes mit dem beweglichen Anschlußglied erfolgt und die lösbare mechanische Verbindung des Koppelgliedes mit dem stationären Anschlußglied entfällt, so daß die längenmäßig komprimierte Schutzabdeckung vom beweglichen Anschlußglied öffnend zurückziehbar ist, und daß im Falle einer maschinenseitig veranlaßten, der Öffnungsbewegung nachfolgenden Schließbewegung des beweglichen Anschlußgliedes in den Überhubbereich durch erneute bewegungsabhängig erfolgende gegenseitige mechanische Druckeingriffe zwischen dem beweglichen Anschlußglied sowie dem Koppelglied und zwischen diesem sowie dem stationären Anschlußglied die lösbare mechanische Verbindung des Koppelgliedes mit dem beweglichen Anschlußglied wieder entfällt und die lösbare mechanische Verbindung des Koppelgliedes mit dem stationären Anschlußglied wieder erfolgt.

Eine derartige Maschinenabdeckung ist einfach, zuverlässig sowie preiswert, erfordert zum Entriegeln sowie Verriegeln keine manuellen Eingriffe und arbeitet mit integrierten Teilen rein mechanisch ohne externe Antriebe. Sie bedient sich des bei jeder Maschine in jeder Maschinenachse vorhandenen und maschinenseitig ansteuerbaren Überhubes, bei dem die längenveränderliche Schutzabdeckung über ihren normalen Arbeitsbereichs hinausgehend noch etwas weiter in einen normalerweise nicht genutzten Überhubbereich verkürzt werden kann. Dort erfolgen die entsprechenden Entriegelung- und Verriegelungsvorgänge zwischen dem Koppelglied und dem stationären Anschlußglied sowie dem beweglichen Anschlußglied durch einfache mechanische Bewegungsdruckvorgänge.

Gemäß der weiteren Ausbildung nach den Ansprüchen 2 und 3 haben sich hierbei in der Praxis einfache, handelsübliche, reversibel auslösbare mechanische Druckdosen bewährt, die mit relativ hierzu bewegten Verbindungshaken zusammenwirken, um diese bei aufeinanderfolgenden bewegungsbedingten Druckeingriffen abwechselnd zu verriegeln und wieder freizugeben. Da es nur auf die relativen gegenseitigen Positionen von Verbindungshaken und Druckdosen ankommt, können diese Elemente an verschiedenen Stellen montiert sein.

In weiterer Ausgestaltung gemäß Anspruch 4 können die mechanischen Druckdosen im Überhubbereich gleichzeitig oder gemäß Anspruch 5 nacheinander ansprechen. Im zweiten Fall kann nach Anspruch 6 im Überhubbereich die Druckdose für die lösbare mechanische Verbindung des Koppelgliedes mit dem beweglichen Anschlußglied vor derjenigen für die lösbare mechanische Verbindung des Koppelgliedes mit dem stationären Anschlußglied ansprechen.

Statt der Verwendung einzelner Druckdosen für die wechselseitigen Entriegelungs-und Verriegelungsvorgänge ist es nach Anspruch 7 auch möglich, am Koppelglied wenigstens eine reversibel auslösbare doppelseitige mechanische Druckdose einzusetzen, die mit entsprechenden Verbindungshaken an den beweglichen und stationären Anschlußgliedern zusammenarbeitet.

Die weitere Ausgestaltung nach Anspruch 8 soll im Überhubbereich - also außerhalb des normalen Arbeitsbereiches - eine exakte Bewegungsführung des beweglichen Anschlußgliedes gegenüber dem Koppelglied und eine anschlagbedingte Mitnahme des Koppelgliedes sicherstellen.

Die Erfindung wird nachfolgend an zeichnerisch dargestellten Ausführungsbeispielen näher erläutert. Es zeigen:
- Fig. 1: in einer vereinfachten perspektivischen Darstellung eine Maschinenabdeckung in ihrem normalen betrieblichen Arbeitsbereich,
- Fig. 2: die Maschinenabdeckung aus Fig. 1 aus einer anderen Blickrichtung,
- Fig. 3: die Maschinenabdeckung aus den Fig. 1 und 2 am Ende ihres ihre längenveränderliche Schutzabdeckung verkürzenden normalen Arbeitsbereiches bzw. beim Eintritt in einen Überhubbereich,
- Fig. 4: die Maschinenabdeckung aus Fig. 3 beim entriegelnden Erreichen des Endes ihres Überhubbereiches,
- Fig. 5: die Maschinenabdeckung aus Fig. 4 nach erfolgtem Entriegeln zu Beginn des öffnenden Zurückbewegens und
- Fig. 6: die Maschinenabdeckung aus Fig. 5 in ihrem entriegelten und geöffneten Betriebszustand.

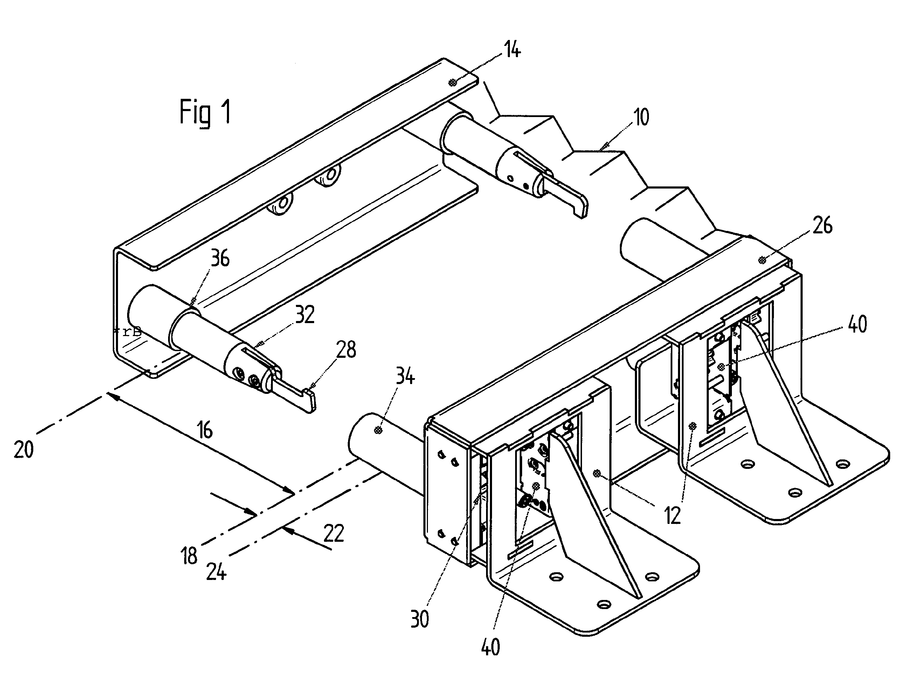

Gemäß Fig. 1 ist eine längenveränderliche Schutzabdeckung 10 beliebiger Art - wie ein Faltenbalg, eine Rollbandabdeckung mit Stahl oder Kunststoffband, eine Lamellenabdeckung, eine Gliederschürze, eine Teleskopstahlabdeckung o. dgl. - an einem Ende mit einem beweglichen Anschlußglied 14 und am anderen Ende mit einem Koppelglied 26 fest verbunden. Im normalen betrieblichen Arbeitsbereich 16 der Schutzabdeckung 10 ist das bewegliche Anschlußglied 14 maschinenseitig linear hinund hergehend antreibbar, während das Koppelglied 26 in diesem Arbeitsbereich 16 mit einem maschinenseitig angebundenen stationären Anschlußglied 12 lösbar verbunden ist. Dadurch kann die Schutzabdeckung 10 in ihrem betrieblichen Arbeitsbereich 16 entsprechend verkürzend komprimiert und verlängernd auseinandergezogen werden. Hierbei kann sich das Anschlußglied 14 mit seinen daran angeschlossenen Teilen zwischen einer betrieblichen Minimalposition 18 mit stärkster Verkürzung der Schutzabdeckung 10 und einer betrieblichen Maximalposition 20 mit größtmöglicher Verlängerung der Schutzabdeckung 10 bewegen.

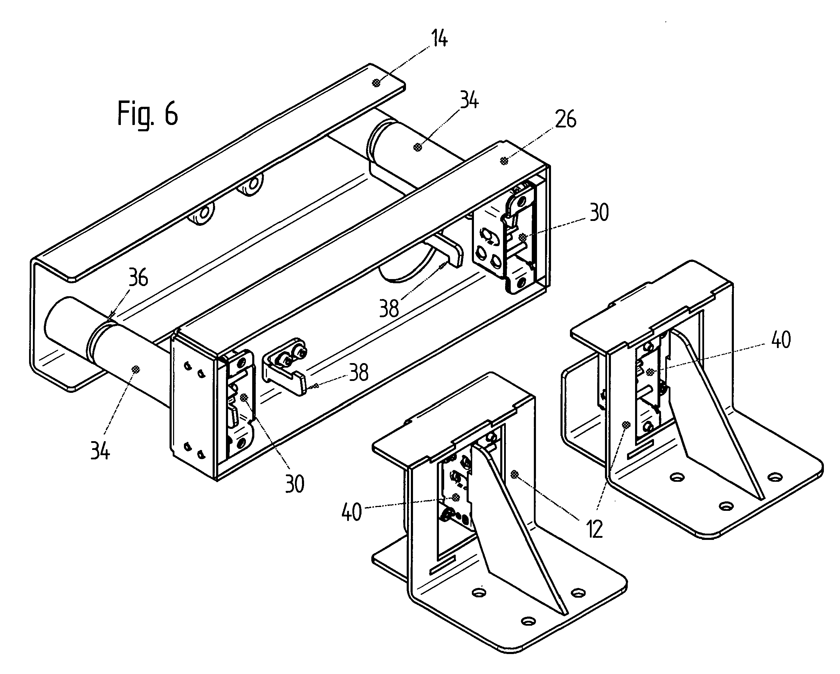

An die betriebliche Minimalposition 18 grenzt ein Überhubbereich 22 mit einer maximalen Überhubposition 24 an. Der Überhubbereich 22 ist außerhalb des normalen Betriebs- oder Arbeitszustands im Bedarfsfall maschinenseitig ansteuerbar, um die Schutzabdeckung 10 beispielsweise für von oben erfolgende Kranbeladungen von großen und schweren Werkstücken gemäß Fig. 6 zu öffnen und später wieder gemäß Fig. 1 zu schließen.

Beim Öffnungsvorgang wird das Koppelglied 26 bei längenverkürzter Schutzabdekkung 10 vom stationären Anschlußglied 12 mechanisch getrennt und mit dem beweglichen Anschlußglied 14 mechanisch verbunden. In diesem Öffnungszustand kann das bewegliche Anschlußglied 14 das Koppelglied 26 mit der verkürzten Schutzabdeckung 10 zurückziehen, so daß zwischen dem Koppelglied 26 und dem stationären Anschlußglied 12 gemäß Fig. 6 ein Freiraum für entsprechende Kranbeladungen o. dgl. entsteht. Umgekehrt wird beim nachfolgenden Schließvorgang das Koppelglied 26 vom beweglichen Anschlußglied 14 - den Freiraum verschließend - zum stationären Anschlußglied 12 bewegt und dabei vom beweglichen Anschlußglied 14 mechanisch getrennt und mit dem stationären Anschlußglied 12 mechanisch verbunden. Dadurch ist der normale Betriebs- oder Arbeitszustand wiederhergestellt.

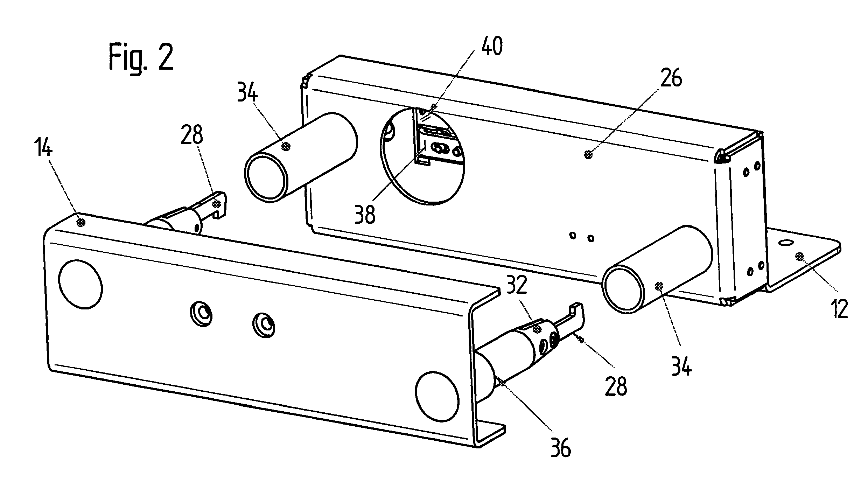

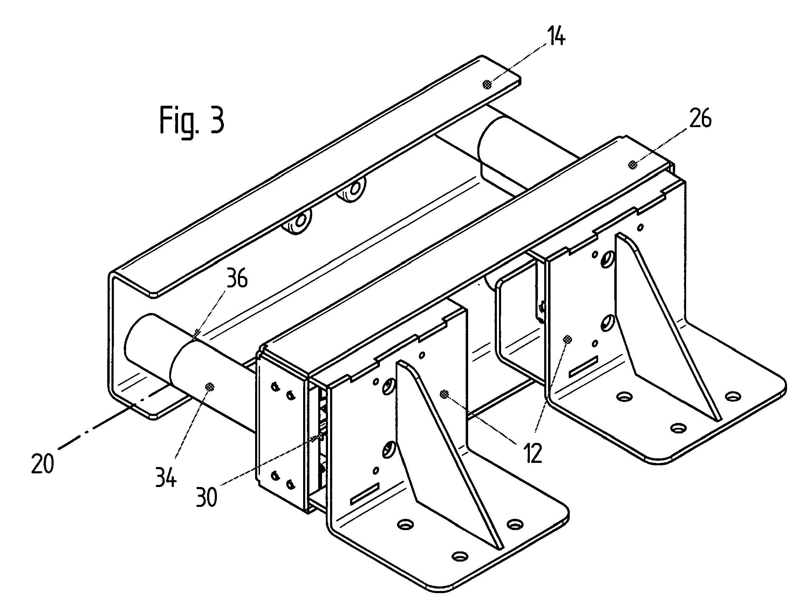

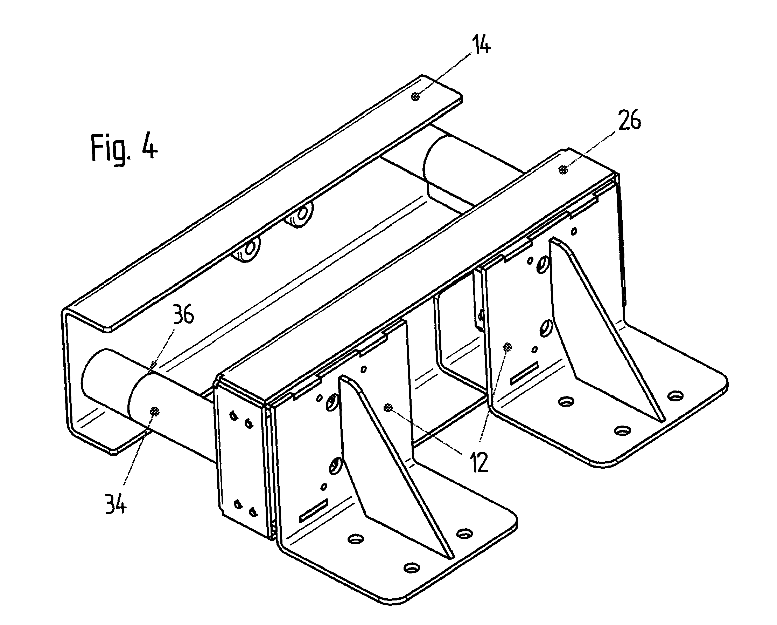

Beim Öffnungsvorgang der Schutzabdeckung 10 ist das bewegliche Anschlußglied 14 mit wenigstens einem Bewegungsanschlag 36 in den Überhubbereich 22 einfahrbar. Beim Erreichen oder innerhalb desselben stößt der Bewegungsanschlag 36 gegen die Stirnseite einer Führungshülse 34 an dem Koppelglied 26. Zuvor ist ein Führungskonus 32 mit einem vorderseitigen Verbindungshaken 28 am beweglichen Anschlußglied 14 in die Führungshülse 34 eingedrungen. Am Koppelglied 26 ist wenigstens eine aus den Figuren 1, 3 und 6 ersichtliche handelsübliche, reversibel auslösbare mechanische Druckdose 30 angebracht, in die der Verbindungshaken 28 des beweglichen Anschlußgliedes 14 lösbar einrastend einführbar ist, um durch diesen ersten mechanischen Druckkontakt den Verbindungshaken 28 in der Druckdose 30 verriegelnd zu verankern. Der Bewegungsanschlag 36 drückt im Überhubbereich 22 über die Führungshülse 34 das Koppelglied 26 aus der Position in Fig. 3 weiter in Richtung zum stationären Anschlußglied 12 in die Position in Fig. 4. Am stationären Anschlußglied 12 ist gemäß den Fig. 1 und 2 wenigstens eine ebenfalls handelsübliche, reversibel auslösbare mechanische Druckdose 40 angebracht, in die hierbei ein aus den Fig. 2 und 6 ersichtlicher, bereits lösbar verankerter Verbindungshaken 38 am Koppelglied 26 weiter einführbar ist. Durch diesen umschaltend auslösenden Druckkontakt wird die zuvor bestehende lösbare Verbindung zwischen der Druckdose 40 und dem Verbindungshaken 38 aufgehoben.

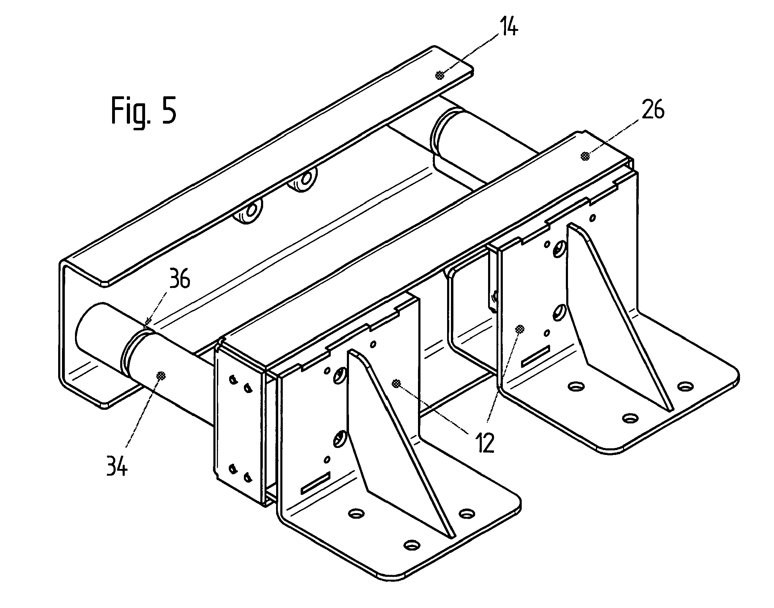

Nunmehr kann beim Zurückbewegen des beweglichen Anschlußgliedes 14 aus dem Überhubbereich 22 der Verbindungshaken 28 über die hiermit verriegelte Druckdose 30 das vom stationären Anschlußglied 12 gelöste Koppelglied 26 - und damit auch die komprimierte Schutzabdeckung 10 - gemäß Fig. 5 zurückziehen. Es entsteht dann der aus Fig. 6 ersichtliche Freiraum für eine Kranbeladung o. dgl..

Zum Verschließen der Maschinenabdeckung wird das bewegliche Anschlußglied 14 erneut in den Überhubbereich 22 gefahren. Hierbei wird der in der Druckdose 30 verankerte Verbindungshaken 28 durch erneutes Hineindrücken in die Druckdose 30 von dieser entriegelnd gelöst. Außerdem erfolgt durch erneutes Hineindrücken des Verbindungshakens 38 in die Druckdose 40 ein Verriegeln mit dieser.

Das Koppelglied 26 ist jetzt wieder mit dem stationären Anschlußglied 12 verbunden und vom beweglichen Anschlußglied 14 gelöst. Nunmehr kann beim Zurückbewegen des beweglichen Anschlußgliedes 14 aus dem Überhubbereich 22 die Schutzabdekkung 10 erneut längenveränderlich betrieben werden.

Gemäß den zeichnerischen Darstellungen sind zum Erzielen eines gleichmäßigen Betriebes jeweils zwei Druckdosen 30 und 40 vorhanden, denen jeweils zwei Verbindungshaken 28 und 38 zugeordnet sind. Es können vor allem bei sehr großen Maschinenabdeckungen grundsätzlich auch mehr als jeweils zwei Druckdosen vorhanden sein.

Die Anordnung der Druckdosen 30 bzw. 40 an dem Koppelglied 26 bzw. an dem stationären Glied 12 ist nicht verbindlich und kann für eine oder beide Druckdosen geändert werden. Dann wären auch entsprechend andere Anordnungen der Verbindungshaken 28, 38 vorzusehen.

Statt getrennter Druckdosen 30, 40 könnte hierfür auch eine kombinierte doppelseitige, reversibel auslösbare, mechanische Druckdose am Koppelglied 26 angebaut werden, der entsprechende Verbindungshaken 28 und 38 an den beweglichen und stationären Anschlußgliedern 14 und 12 zuzuordnen sind.

## Patentansprüche

1. Maschinenabdeckung mit einer längenveränderlichen Schutzabdeckung (10), deren Enden im betrieblichen Arbeitsbereich (16) der Schutzabdeckung mit einem stationären Anschlußglied (12) und einem beweglichen Anschlußglied (14) verbunden sind, wobei das bewegliche Anschlußglied (14) maschinenseitig zwischen einer betrieblichen Minimalposition (18) mit minimaler und einer betrieblichen Maximalposition (20) mit maximaler Längenausdehnung der Schutzabdeckung linear hin- und herbeweglich angetrieben ist,
**dadurch gekennzeichnet,**
**daß** das im Arbeitsbereich (16) stationäre Ende der Schutzabdeckung (10) fest mit einem doppelseitig reversibel arbeitenden Koppelglied (26) verbunden ist, welches im Arbeitsbereich (16) der Schutzabdeckung (10) eine lösbare mechanische Verbindung mit dem stationären Anschlußglied (12) aufweist,
**daß** im Falle einer maschinenseitig veranlaßten Öffnungsbewegung des beweglichen Anschlußgliedes (14) in einen an dessen betriebliche Minimalposition (18) angrenzenden Überhubbereich (22) durch bewegungsabhängig erfolgende gegenseitige mechanische Druckeingriffe zwischen dem beweglichen Anschlußglied (14) sowie dem Koppelglied (26) und zwischen diesem sowie dem stationären Anschlußglied (12) eine lösbare mechanische Verbindung des Koppelgliedes (26) mit dem beweglichen Anschlußglied (14) erfolgt und die lösbare mechanische Verbindung des Koppelgliedes (26) mit dem stationären Anschlußglied (12) entfällt, so daß die längenmäßig komprimierte Schutzabdekkung (10) vom beweglichen Anschlußglied (14) öffnend zurückziehbar ist,
und **daß** im Falle einer maschinenseitig veranlaßten, der Öffnungsbewegung nachfolgenden Schließbewegung des beweglichen Anschlußgliedes (14) in den Überhubbereich (22) durch erneute bewegungsabhängig erfolgende gegenseitige mechanische Druckeingriffe zwischen dem beweglichen Anschlußglied (14) sowie dem Koppelglied (26) und zwischen diesem sowie dem stationären Anschlußglied (12) die lösbare mechanische Verbindung des Koppelgliedes (26) mit dem beweglichen Anschlußglied (14) wieder entfällt und die lösbare mechanische Verbindung des Koppelgliedes (26) mit dem stationären Anschlußglied (12) wieder erfolgt.

2. Maschinenabdeckung nach Anspruch 1, **gekennzeichnet durch** wenigstens eine im Überhubbereich (22) reversibel auslösbare mechanische Druckdose (40) an dem stationären Anschlußglied (12) - oder an dem Koppelglied (26) - und **durch** wenigstens einen mit dieser Druckdose (40) mechanisch lösbar verriegelbaren Verbindungshaken (38) an dem Koppelglied (26) - oder an dem stationären Anschlußglied (12).

3. Maschinenabdeckung nach Anspruch 1 oder 2, **gekennzeichnet durch** wenigstens eine im Überhubbereich (22) reversibel auslösbare mechanische Druckdose (30) an dem Koppelglied (26) - oder an dem beweglichen Anschlußglied (14) - und **durch** wenigstens einen mit dieser Druckdose (30) mechanisch lösbar verriegelbaren Verbindungshaken (28) an dem beweglichen Anschlußglied (14) - oder an dem Koppelglied (26).

4. Maschinenabdeckung nach Anspruch 2 und 3, **gekennzeichnet durch** im Überhubbereich (22) gleichzeitig ansprechende mechanische Druckdosen (30, 40).

5. Maschinenabdeckung nach Anspruch 2 und 3, **gekennzeichnet durch** im Überhubbereich (22) nacheinander ansprechende mechanische Druckdosen (30, 40).

6. Maschinenabdeckung nach Anspruch 5, **gekennzeichnet durch** eine beim Bewegen des beweglichen Anschlußgliedes (14) in den Überhubbereich (22) zuerst ansprechende Druckdose (30) für die lösbare mechanische Verbindung des Koppelgliedes (26) mit dem beweglichen Anschlußglied (14).

7. Maschinenabdeckung nach Anspruch 1, **gekennzeichnet durch** wenigstens eine im Überhubbereich (22) reversibel auslösbare, doppelseitige mechanische Druckdose an dem Koppelglied (26) und **durch** wenigstens je einen mit dieser Druckdose mechanisch lösbar verriegelbaren Verbindungshaken (28, 38) an dem beweglichen Anschlußglied (14) und an dem stationären Anschlußglied (12).

8. Maschinenabdeckung nach einem der Ansprüche 1 bis 7, **dadurch gekennzeichnet, daß** für die lösbaren mechanischen Verbindungen des Koppelgliedes (26) mit den beweglichen und stationären Anschlußgliedern (14, 12) eine zur Druckdose (30) führende Führungshülse (34) am Koppelglied (26) und ein in diese einführbarer Führungskonus (32) mit dem Verbindungshaken (28) sowie einem Begrenzungsanschlag (32) am beweglichen Anschlußglied (14) vorgesehen sind.
